# EUROPÄISCHE PATENTANMELDUNG

(11) **EP 2 581 209 A1**
(43) Veröffentlichungstag der Anmeldung: **17.04.2013**
(21) Anmeldenummer: 12185042.4
(22) Anmeldetag: 19.09.2012
(51) Int. Cl.: B30B 1/18, F16B 33/02, F16H 25/24

(54) **Vorrichtung zum Betreiben eines Presskolbens**

(30) Priorität: 14.10.2011 DE 102011084489
(71) Anmelder: ROBERT BOSCH GMBH, 70442 Stuttgart (DE)
(72) Erfinder: Krueger, Hartmut, 77815 Buehl (DE); Durix, Lucas, 67410 Drusenheim (FR); Bolz, Martin-Peter, 77815 Buehl (DE)

(57) **Zusammenfassung**

Die Erfindung betrifft eine Vorrichtung (5) zum Betreiben eines Presskolbens (2), insbesondere eines Hydraulikpresskolbens, mit wenigstens einer Spindel (6), die mit einer Spindelmutter (8) zur axialen Verlagerung des Presskolbens (2) zusammenwirkt, wobei die Spindel (6) ein Außengewinde (7) und die Spindelmutter (8) ein Innengewinde (9) aufweist, die miteinander kämmen, und wobei die Spindelmutter dem Presskolben (2) zugeordnet und die Spindel (6) zur axialen Verlagerung der Spindelmutter (8) antreibbar ist oder wobei die Spindel (6) dem Presskolben (2) zugeordnet und die Spindelmutter (8) zur axialan Verlagerung der Spindel (6) antreibbar ist. Dabei ist vorgesehen, dass das Innengewinde (9) zwei Flanken (19,20) aufweist, die asymmetrisch zueinander ausgerichtet sind.

## Beschreibung

Die Erfindung betrifft eine Vorrichtung zum Betreiben eines Presskolbens, insbesondere eines Hydraulikpresskolbens, mit wenigstens einer Spindel, die mit einer Spindelmutter zur axialen Verlagerung des Presskolbens zusammenwirkt, wobei die Spindel ein Außengewinde und die Spindelmutter ein Innengewinde aufweist, die miteinander kämmen, und wobei die Spindelmutter dem Presskolben zugeordnet und die Spindel zur axialen Verlagerung der Spindelmutter antreibbar ist, oder wobei die Spindel dem Presskolben zugeordnet und die Spindelmutter zur axialen Verlagerung der Spindel antreibbar ist.

### Stand der Technik

Vorrichtungen der eingangs genannten Art sind aus dem Stand der Technik bekannt. Presskolben haben die Eigenschaft, dass sie in eine Bewegungsrichtung eine hohe Kraft und die entgegengesetzte Richtung eine sehr viel geringere Kraft übertragen müssen. Bei der Bewegung in Arbeitsrichtung muss die gewünschte Presskraft, beispielsweise zum Komprimieren eines Mediums oder zur Verlagerung eines Elements, ausreichen. Zur Rückholung des Presskolbens ist lediglich eine Kraft erforderlich, die das Eigengewicht des Kolbens beziehungsweise entsprechende Reibkräfte, die zum Verlagern des Kolbens notwendig sind, überwindet. Zum Antrieb eines derartigen Presskolbens, insbesondere wenn hohe Kräfte in Arbeitsrichtung übertragen werden sollen, ist häufig ein Spindelgetriebe vorgesehen, das wenigstens eine antreibbare Spindel umfasst, die ein Außengewinde aufweist, sowie eine dem Presskolben zugeordnete Spindelmutter, die ein mit dem Außengewinde der Spindel zusammenwirkendes Innengewinde aufweist. Durch eine Rotationsbewegung der Spindel wird die Spindelmutter, die zweckmäßigerweise drehfest angeordnet ist, sodass eine Relativbewegung zwischen der rotierenden Spindel und Spindelmutter entsteht, axial verlagert. Durch eine feste Zuordnung der Spindelmutter zu dem Presskolben wird die Axialbewegung der Spindelmutter auf den Presskolben übertragen, sodass dieser entsprechend in Arbeitsrichtung oder in Rückholrichtung verlagert wird. Alternativ kann auch die Spindel dem Presskolben zugeordnet und insbesondere mit diesem drehfest verbunden sein, während die Spindelmutter derart antreibbar ist, dass sie eine Rotationsbewegung durchführt, die zu einer axialan Verlagerung der Spindel führt. Je nach dem, welches Element angetrieben werden soll, ist der Spindelmutter oder der Spindel ein entsprechendes Antriebsaggregat, wie beispielsweise ein Elektromotor, zugeordnet und beispielsweise über ein Zahnradgetriebe oder dergleichen damit wirkverbunden. Ist die Spindel dem Presskolben zugeordnet beziehungsweise mit diesem fest verbunden, führt dies dazu, dass eine Rotationsbewegung der Spindelmutter zu einer Translationsbewegung der Spindel und damit des Presskolbens führt. Bei der Ausbildung der Vorrichtung muss berücksichtigt und sichergestellt werden, dass die Spindel oder die Spindelmutter eine gewünschte Arbeitslast aufnehmen können, ohne Schaden zu nehmen. Die Vorrichtung muss insbesondere so ausgelegt sein, dass Ermüdungsschäden, die zu einem Versagen führen könnten, langsam genug verlaufen, um die Hauptfunktion sowie die Integrität der Spindel und der Spindelmutter über die gesamte Lebensdauer zu gewährleisten.

### Offenbarung der Erfindung

Die erfindungsgemäße Vorrichtung zum Betreiben eines Presskolbens weist die Merkmale des Anspruchs 1 auf und hat den Vorteil, dass das Spindelgetriebe bei gleicher Belastung für eine höhere Lebensdauer ausgelegt ist und gleichzeitig günstigere Werkstoffe und/oder Herstellungsverfahren zur Herstellung der Vorrichtung angewandt werden können. Die Vorrichtung zeichnet sich dadurch aus, dass das Innengewinde zwei Flanken aufweist, die asymmetrisch ausgebildet sind. Während üblicherweise die Gewinde von Spindelgetrieben symmetrisch ausgebildet beziehungsweise ausgerichtete Flanken aufweisen, ist also erfindungsgemäß vorgesehen, dass die Flankenform von der symmetrischen Form abweicht. Hierdurch wird erreicht, dass zwei unterschiedliche Flanken gebildet werden, die insbesondere in Bezug auf ihre Funktion im Betrieb optimiert werden können. Insbesondere ist eine der Flanken für die Aufnahme der Arbeits- beziehungsweise Presskraft optimiert und die andere der Flanken zur Aufnahme der Rückholkraft optimiert ausgebildet beziehungsweise in Bezug auf die Symmetrie ausgerichtet. Durch die funktionsspezifische Ausbildung der jeweiligen Flanke wird gleichzeitig erreicht, dass auch bei Verwendung günstigerer Materialien die gleichen Kräfte übertragen werden können und die Lebensdauer des Spindelgetriebes insgesamt erhalten bleibt.

Vorzugsweise ist dabei vorgesehen, dass bezüglich einer radial zur Spindel ausgerichteten, gedachten Achse eine der Flanken als Arbeitsflanke einen größeren Winkel aufweist als die andere Flanke, die eine Rückholflanke bildet. Die Arbeitsflanke dient also zur Aufnahme der Arbeits- und Presskraft, während die Rückholflanke zur Aufnahme der Kraft ausgebildet ist, die beim Zurückholen des Presskolbens, also entgegen der Arbeitsrichtung, übertragen wird. Die Arbeitsflanke weist einen vergleichsweise größeren Winkel zu der radialen Achse auf als die Rückholflanke, sodass die Arbeitsflanke steiler bezüglich der Bewegungsrichtung ausgerichtet ist als die Rückholflanke. Aufgrund dieser asymmetrischen Ausbildung der Flanken kann die Spindelmutter höhere Lasten beziehungsweise Kräfte von der Spindel in Antriebsrichtung aufnehmen. Die Spannungsverteilung am Zahnfuß der Spindelmutter ist anwendungsspezifisch optimiert, wodurch Spannungskonzentrationen im Zahnfuß abgebaut werden. Die weniger steile Ausrichtung der Rückholflanke bezüglich der Arbeitsflanke bewirkt, dass das Gewinde in Arbeitsrichtung wesentlich höhere Kräfte aufnehmen kann, da durch die weniger schräg ausgerichtete Rückholflanke die Arbeitsflanke eine höhere Abstützung an der Spindelmutter erfährt. Die Arbeitsflanke liegt auf der der Druckseite des Presskolbens abgewandten Seite des Innengewindes, um die Arbeitskraft in Richtung der Druckseite des Kolbens aufzunehmen.

Vorzugsweise sind die Flanken des Außengewindes der Spindel symmetrisch ausgebildet. Dabei ist das Außengewinde der Spindel zum Zusammenwirken mit dem Innengewinde der Spindelmutter in Arbeitsrichtung optimiert, sodass eine möglichst große Anlagefläche zwischen der Arbeitsflanke der Spindelmutter und der entsprechenden Arbeitsflanke der Spindel gewährleistet ist. Da in Rückholrichtung nur geringe Kräfte übertragen werden müssen, ist hier kein besonderer Anlagekontakt beziehungsweise eine komplementäre Ausbildung der Rückholflanken erforderlich.

Gemäß einer vorteilhaften Weiterbildung der Erfindung ist vorgesehen, dass die Flanken des Außengewindes der Spindel einen kleineren Abstand zueinander aufweisen als die Flanken des Innengewindes der Spindelmutter. Mit anderen Worten sind die Windungen der Spindel schmaler ausgebildet als die Windungen der Spindelmutter. Dadurch wird erreicht, dass der Abstand zwischen den Windungen der Spindel beziehungsweise ein entsprechende Freiraum zwischen benachbarten Windungen der Spindel vergrößert wird. Der vergrößerte Freiraum erlaubt es, die Windungen beziehungsweise Flanken der Spindelmutter erfindungsgemäß auszubilden, also dass das Gewinde der Spindelmutter mit asymmetrischen Flanken zur Verstärkung versehen wird, ohne dass ein Konflikt mit dem Gewinde der Spindel entsteht. Natürlich ist es aber auch denkbar, das Gewinde der Spindel mit asymmetrisch zueinander ausgerichteten Flanken, insbesondere in Arbeitsrichtung, optimiert ausgerichtet zu versehen. Das Innengewinde der Spindelmutter kann dabei alternativ mit symmetrisch ausgebildeten beziehungsweise ausgerichteten Flanken versehen sein.

Vorzugsweise ist die Spindelmutter aus Kunststoff gefertigt, wobei Spindelmutter und Innengewinde bevorzugt einstückig miteinander ausgebildet sind, sodass auch das Spindelgewinde aus Kunststoff besteht. Durch die vorteilhafte Ausbildung beziehungsweise Ausrichtung der Flanken des Gewindes der Spindelmutter können auch günstige Kunststoffwerkstoffe verwendet werden. Auch bei hohen Belastungen, wo bisher üblicherweise Stahl als Material für die Spindelmutter notwendig war, ist es nunmehr möglich, einen Kunststoff vorzusehen.

Bevorzugt ist die Spindel aus Stahl gefertigt, beispielsweise mittels eines Rollierprozesses, wobei das Außengewinde bevorzugt einstückig mit der Spindel ausgebildet ist. Zwar ist es auch denkbar, die Spindel ebenfalls aus Kunststoff zu fertigen, jedoch bietet der Stahl Vorteile bezüglich der Steifigkeit der Spindel in ihrer Längserstreckung, sodass in Bezug auf die Spindel Stahlwerkstoffe weiterhin bevorzugt werden.

Besonders bevorzugt liegt der Winkel zwischen der Rückholflanke und der gedachten radialen Achse zwischen 25° bis 40°, insbesondere zwischen 30° und 35°. Durch diese flache Ausrichtung der Rückholflanke wird das Spannungsniveau am Zahn- beziehungsweise Gewindefuß verringert und somit der Bereich, in welchem Risse in der Regel bei Ermüdungsbelastungen entstehen, entlastet.

Im Folgenden soll die Erfindung anhand der Zeichnung näher erläutert werden. Dazu zeigen
- Figur 1: eine Hydraulikkolbeneinrichtung mit einer Vorrichtung zum Betreiben eines Presskolbens, und
- Figur 2: eine vergrößerte Detailansicht der Vorrichtung gemäß einem alternativen Ausführungsbeispiel.

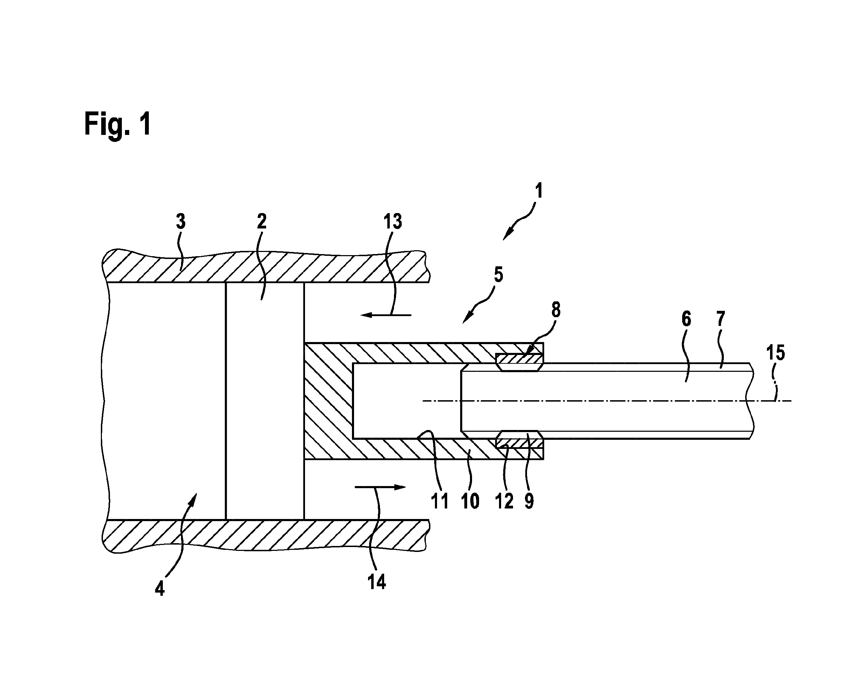

Figur 1 zeigt in einer vereinfachten Schnittdarstellung eine Presskolbeneinrichtung 1 mit einem Presskolben 2, der in einem Zylinder 3 axial verlagerbar ist und in dem vorliegenden Ausführungsbeispiel zum Pressen eines hydraulischen Mediums auf der Druckseite 4 des Presskolbens 2 dient. Weiterhin weist die Presskolbeneinrichtung 1 eine Vorrichtung 5 zum Betreiben des Presskolbens 2 auf.

Die Vorrichtung 5 weist eine antreibbare Spindel 6 auf, die ein Außengewinde 7 besitzt, das sich im Wesentlichen über die gesamte Länge der Spindel 6 erstreckt. Weiterhin weist die Vorrichtung 5 eine Spindelmutter 8 auf, die ein Innengewinde 9 aufweist, welches mit dem Außengewinde 7 der Spindel 6 kämmt. Die Spindelmutter 8 ist integral in einen Flansch 10 des Presskolbens 2 ausgebildet. Der Flansch 10 weist eine Öffnung beziehungsweise Bohrung 11 auf, deren Außendurchmesser zumindest etwas größer als der Außendurchmesser des Außengewindes 7 der Spindel 6 ist, sodass die Spindel 6 in die Bohrung 11 axial einführbar ist. Die Bohrung 11 weist an ihrem freien Ende einen eine Stufe 12 bildenden vergrößerten Durchmesser auf. In diese Stufe ist die Spindelmutter 8 fest eingebracht, sodass sie insbesondere drehfest bezüglich des Flanschs 10 gehalten ist. Durch eine Rotationsbewegung der Spindel 6 wird eine Axialkraft von dem Außengewinde 7 auf das Innengewinde 9 der Spindelmutter 8 übertragen, und über die Spindelmutter 8 auf den Flansch 10 und damit auf den Presskolben 2. Je nach dem, in welche Richtung die Spindel 6 rotiert, wird der Presskolben 2 entweder in Richtung seiner Druckseite 4 beziehungsweise des zu pressenden Mediums verlagert, wie durch einen Pfeil 13 angedeutet, oder in die entgegengesetzte Richtung, wie durch einen Pfeil 14 angedeutet. Die durch den Pfeil 13 gekennzeichnete Richtung stellt somit die Arbeitsrichtung des Presskolbens 2 dar, während die mit dem Pfeil 14 gekennzeichnete Richtung die Rückholrichtung des Presskolbens 2 zeigt.

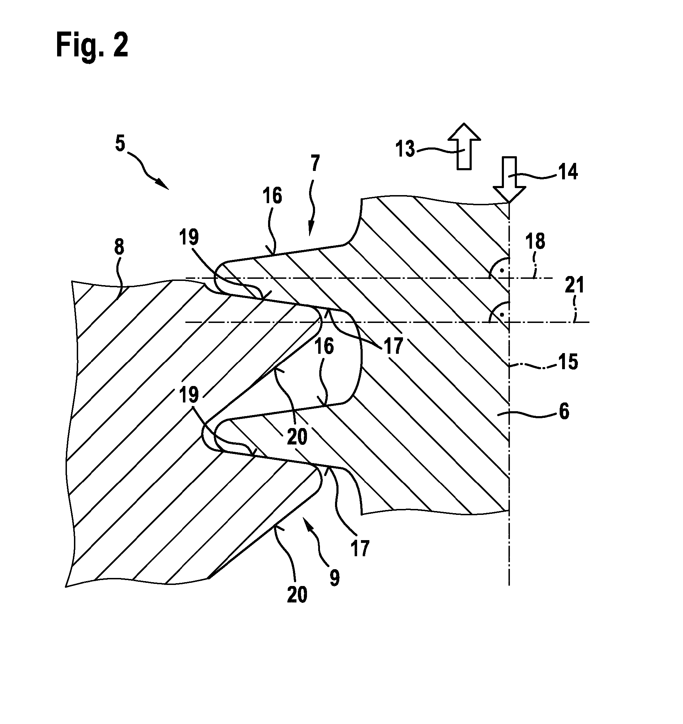

Figur 2 zeigt eine vergrößerte Detailansicht der Vorrichtung 5 zum Betreiben des Presskolbens 2 gemäß eines alternativen Ausführungsbeispiels im Bereich der miteinander kämmenden Gewinde von Spindelmutter 8 und Spindel 6. Bei diesem Ausführungsbeispiel ist die Spindel drehfest mit dem Presskolben 2 verbunden, der insbesondere ebenfalls drehfest bezüglich des Zylinders 3 angeordnet ist, während die Spindelmutter 8 antreibbar beziehungsweise rotierbar ausgebildet ist, sodass durch Antreiben der Spindelmutter 8 die Spindel 6 und damit der Presskolben 2 translatorisch bewegt werden. Die folgende Beschreibung bezüglich der Ausbildung der Gewinde von Spindelmutter 8 und Spindel 6 gilt für beide Ausführungsbeispiele. Das Außengewinde 7 der Spindel 6 ist, wie üblich, derart ausgebildet, dass seine Flanken 16 und 17 symmetrisch bezüglich einer radial zu der Rotationsachse 15 ausgerichteten, gedachten Achse 17 ausgerichtet sind, wobei in dem Ausführungsbeispiel der Figur 2 die Spindelmutter 8 um die Rotationsachse rotiert, und nicht die Spindel 6. Alternativ kann auch vorgesehen sein, dass die Spindel 6 lediglich bezüglich eines Gehäuses oder des Zylinders 3 drehfest und axial verlagerbar angeordnet beziehungsweise gehalten ist. Dabei kann die Spindel 6 beispielsweise durch ein Gelenk, insbesondere Kugelgelenk, mit dem Presskolben 2 verbunden sein.

Das Außengewinde 9 der Spindelmutter 8 weist hingegen asymmetrisch ausgerichtete Flanken 19 und 20 auf. Bezüglich einer radial zur Rotationsachse 15 liegenden gedachten Achse 21, die durch eine Zahn- beziehungsweise Gewindespitze des Außengewindes 9 führt, weist die Flanke 19 einen kleineren Winkel auf als die Flanke 20. Daraus folgt, dass die Flanke 19 steiler ausgebildet ist als die Flanke 20. Dabei bildet die Flanke 19 eine Arbeitsflanke, während die Flanke 20 eine Rückholflanke bildet, sodass, wenn der Presskolben 2 in Arbeitsrichtung gemäß Pfeil 13 verlagert werden soll, die Spindel mit ihrer Flanke 17 von der Arbeitsflanke beziehungsweise Flanke 19, die die steilere der beiden Flanken des Außengewindes 9 darstellt, beaufschlagt wird. Durch die Asymmetrie der Flanken kann die hohe Kraft von der Spindelmutter 8 in axialer Richtung, also in Richtung der Rotationsachse 15, auf die Spindel 6 übertragen werden, ohne dass auch bei hoher Lebensdauer Risse im Bereich des Zahnfußes an der Spindelmutter 8 entstehen. Die weniger steile Flanke 20 sorgt dafür, dass das Gewinde 9 in Arbeitsrichtung besonders hohe Kräfte übertragen kann. Wird die Rotationsrichtung der Spindelmutter 8 geändert, so wechseln die aneinander liegenden Flankenpaare zu den Flanken 20 und 16, sodass die Spindel 6 an ihrem Außengewinde 7 von der flacher ausgerichtete Flanke 20 des Innengewindes 9 beaufschlagt wird.

Da bei der Rückholbewegung in der Regel nur sehr geringe Kräfte auftreten, ist der dabei entstehende, vergleichsweise kleine Berührungskontakt vollkommen ausreichend, um den Presskolben 2 in Richtung des Pfeils 14 zurückzubewegen. Durch die asymmetrische Ausbildung der Flanken 19 und 20 kann die Spindelmutter 8 höhere Kräfte auf die Spindel 6 in Arbeitsrichtung übertragen, ohne dabei beschädigt zu werden. Die Spannungsverteilung am Zahnfuß zwischen den Flanke 20 und 19 zwei benachbarter Windungen beziehungsweise Zähne wird hierdurch verbessert und dadurch die Spannungskonzentration im Zahnfuß abgebaut, wodurch das Bilden von Rissen, insbesondere Ermüdungsrissen, verhindert wird.

Durch die vorteilhafte Ausgestaltung können auch günstigere Werkstoffe für die Spindelmutter 8 als bisher üblich verwendet werden. Beispielsweise kann nunmehr auch ein Kunststoff in Lastbereichen verwendet werden, in denen sonst bisher Metall erforderlich war. Entsprechend ist es nunmehr auch möglich, anstelle eines Hochleistungs-Kunststoffs einen preiswerteren Kunststoff mit geringeren mechanischen Eigenschaften bezüglich der Stabilität vorzusehen. Die Lebensdauer der Vorrichtung 5 wird durch den Abbau des Spannungsniveaus am Zahn- beziehungsweise Gewindefuß aufgrund der asymmetrischen Flankengeometrie erzielt.

Die Vorrichtung 5 ist überall dort von Vorteil, wo ein Element, insbesondere der obenstehende Presskolben 2, in nur eine Richtung arbeitet, wo also die Last stets in die gleiche Richtung wirkt. Besonders gut eignet sich die Vorrichtung 5 bei Hydraulikpresskolben, die von einem hydraulischen Druck immer in die gleiche Richtung belastet werden, zumindest solange kein Unterdruck an der Druckseite 4 des Presskolbens 2 entsteht. Die Spindel 6 ist zweckmäßigerweise aus Stahl gefertigt. Der Presskolben 2 und/oder der Flansch 10 können ebenfalls aus Kunststoff oder aus Stahl gefertigt sein. Zweckmäßigerweise ist das Außengewinde 7 einstückig mit der Spindel 6 und das Innengewinde 9 einstückig mit der Spindelmutter 8 ausgebildet. Weiterhin ist es auch denkbar, die Spindelmutter 8 oder die Spindel 6 statt als Einsatzteil vorzusehen, einstückig mit dem Flansch 10 auszubilden.

Wie dargestellt, weisen die benachbarten Windungen des Außengewindes 7 einen derart großen Abstand zueinander auf, dass die Windungen des Außengewindes 9 problemlos in den Freiraum hineinragen können. Ist die Spindel 6 aus Stahl gefertigt, so können die Windungen des Außengewindes 7 sehr viel dünner als die Windungen des Innengewindes 9 der Spindelmutter 8 ausgeführt sein, um den Abstand zwischen zwei benachbarten Windungen des Außengewindes 7 weiter zu vergrößern. Dadurch wird weiterer Freiraum für die Windungen des Innengewindes 9 geschaffen, sodass beispielsweise die Flanke 20 noch flacher ausgerichtet werden kann, beziehungsweise mit einem größeren Winkel bezüglich der Achse 21 versehen werden kann. Prinzipiell ist es jedoch auch denkbar, das Außengewinde 7 ebenfalls mit asymmetrisch ausgebildeten Flanken zu versehen. Dann wird jedoch eine Fertigung der Spindel 6 aus Kunststoff aus herstellungstechnischen Gründen bevorzugt.

## Patentansprüche

1. Vorrichtung (5) zum Betreiben eines Presskolbens (2), insbesondere eines Hydraulikpresskolbens, mit wenigstens einer Spindel (6), die mit einer Spindelmutter (8) zur axialen Verlagerung des Presskolbens (2) zusammenwirkt, wobei die Spindel (6) ein Außengewinde (7) und die Spindelmutter (8) ein Innengewinde (9) aufweist, die miteinander kämmen, und wobei die Spindelmutter dem Presskolben (2) zugeordnet und die Spindel (6) zur axialen Verlagerung der Spindelmutter (8) antreibbar ist oder wobei die Spindel (6) dem Presskolben (2) zugeordnet und die Spindelmutter (8) zur axialan Verlagerung der Spindel (6) antreibbar ist, **dadurch gekennzeichnet, dass** das Innengewinde (9) zwei Flanken (19,20) aufweist, die asymmetrisch zueinander ausgerichtet sind.

2. Vorrichtung nach Anspruch 1, **dadurch gekennzeichnet, dass** bezüglich einer radial zur Spindel (6) ausgerichteten, gedachten Achse (21) eine der Flanken (19) als Arbeitsflanke einen größeren Winkel aufweist als die andere Flanke (20), die eine Rückholflanke bildet.

3. Vorrichtung nach einem der vorhergehenden Ansprüche, **dadurch gekennzeichnet, dass** die Arbeitsflanke auf der der Druckseite (4) des Presskolbens (2) abgewandten Seite des Innengewindes (9) liegt.

4. Vorrichtung nach einem der vorhergehenden Ansprüche, **dadurch gekennzeichnet, dass** das Außengewinde (7) zwei Flanken (16,17) aufweist, die symmetrisch zueinander ausgebildet sind.

5. Vorrichtung nach einem der vorhergehenden Ansprüche, **dadurch gekennzeichnet, dass** die Flanken (16,17) des Außengewindes (7) der Spindel (6) einen kleineren Abstand zueinander aufweisen als die Flanken (19,20) des Innengewindes (9) der Spindelmutter (8).

6. Vorrichtung nach einem der vorhergehenden Ansprüche, **dadurch gekennzeichnet, dass** die Spindelmutter (8) aus Kunststoff gefertigt ist.

7. Vorrichtung nach einem der vorhergehenden Ansprüche, **dadurch gekennzeichnet, dass** die Spindel (6) aus Stahl gefertigt ist.

8. Vorrichtung nach einem der vorhergehenden Ansprüche, **dadurch gekennzeichnet, dass** der Winkel zwischen der Rückholflanke und der gedachten Achse (21) zwischen 25° und 40°, insbesondere zwischen 30° und 35° liegt.
